# EUROPÄISCHE PATENTANMELDUNG

(11) **EP 3 190 230 A1**
(43) Veröffentlichungstag der Anmeldung: **12.07.2017**
(21) Anmeldenummer: 16150755.3
(22) Anmeldetag: 11.01.2016
(51) Int. Cl.: E01B 31/17, B24D 5/16

(54) **LAGERBUCHSE FÜR EIN SCHLEIFELEMENT**

(71) Anmelder: Vossloh High Speed Grinding GmbH, 21079 Hamburg (DE)
(72) Erfinder: Viets, Dr. Ing. Christian, 21244 Buchholz (DE)
(74) Vertreter: Raffay & Fleck

(57) **Zusammenfassung**

Mit der Erfindung wird eine Lagerbuchse (1) für ein Schleifelement für das abrasive Bearbeiten von Oberflächen im Gleis verlegter Schienen während einer Überfahrt, angegeben, auf der ein Abrasivkörper mit verbessertem, insbesondere axialem Halt festgelegt werden kann. Die Lagerbuchse weist eine Längsachse (L) und eine im Wesentlichen zylinderförmigen Außenfläche (2) auf. Sie zeichnet sich dadurch aus, dass auf der Außenfläche (2) wenigstens ein um den Umfang umlaufender Einstich (6) mit einem gegenüber der Außenfläche (2) einen geringeren Durchmesser aufweisenden Grund (9) und von dem Grund (9) zu der Außenfläche (2) führenden Flankenwänden (7, 8) vorgesehen ist, wobei die Flankenwände (7, 8) ausgehend von der Außenfläche (2) zu dem Grund (9) des Einstichs (6) in einem Winkel (α) zu der Längsachse (L) der Lagerbuchse verlaufen und dieser Winkel (α) zwischen 30° und 75° beträgt.

## Beschreibung

Die vorliegende Erfindung betrifft eine Lagerbuchse für ein Schleifelement für das apparative Bearbeiten von Oberflächen im Gleis verlegter Schienen während einer Überfahrt.

Es ist eine bekannte und geübte Praxis, im Gleis verlegte Schienen durch Schleifbearbeitung zu pflegen und zu überholen, um dadurch durch die Beanspruchung der Zugüberfahrten hervorgerufenen Schäden vorzubeugen. So werden beispielsweise Haarrisse in den Schienenköpfen ausgeschliffen, und es wird einer größeren Rissbildung vorgebeugt. Für eine derartige Schleifbearbeitung gibt es zwei grundsätzlich unterschiedliche technische Vorgehensweisen. Sehr lange bereits bekannt ist eine Schleifbearbeitung mit motorisch angetriebenen Schleifelementen. Dies können Umfangsschleifelemente sein, aber auch solche, bei denen die Schleifbearbeitung mit einer glatten Stirnseite des Schleifelements erfolgt, zum Beispiel Topfschleifelemente. In einer alternativen Variante werden frei drehbar gelagerte Schleifelemente mit schräg zur Längsrichtung der Schienen orientierten Rotationsachsen in schneller Überfahrt über die Schienen gezogen, wobei sich aufgrund der Schrägstellung und des Kontaktes des jeweiligen Schleifelements mit der Schienenoberfläche bei der Überfahrt eine Rotation des Schleifelements einstellt und zugleich ein Schleifeffekt. Beschrieben ist eine solche Vorrichtung z.B. in der EP 708 205 B1.

Bei den Schleifelementen, die für die vorstehend zuletzt genannte Schleiftechnik eingesetzt werden, handelt es sich in der Regel um im wesentlichen zylinder- bzw. walzenförmige Schleifelemente, bei denen ein eigentlicher Abrasivkörper aus einem Schleifmaterial, häufig sind dies mit einem Bindemittel zusammen gehaltene, scharfkantige Korundpartikel, mit einer Lagerbuchse verbunden ist. In der Lagerbuchse sitzen Drehlager, wie zu Beispiel Kugellager, und zentral die Drehachse, um die herum das Schleifelement im Gebrauch rotiert.

Bei den Lagerbuchsen handelt es sich im Stand der Technik um Elemente aus Metall, typischerweise Stahl, die eine geradlinig verlaufende, zylinderförmige Außenfläche aufweisen. Auf diese Außenfläche ist dann der eigentliche Abrasivkörper (aus dem Schleifmittel-Binder-Gemisch) aufgebracht und an dieser festgelegt. Dabei ist wesentlich, dass die Verbindung zwischen dem Abrasivkörper und der Lagerbuchse sowohl für die Übertragung eines Drehmoments, also in Rotationsrichtung, ausreichend fest und stabil ist, als auch gegen ein axiales Verrutschen des Abrasivkörpers relativ zu der Lagerbuchse gesichert ist. Um dies zu erreichen, ist im Stand der Technik die zylinderförmig gerade gebildete Oberfläche der Lagerbuchse mit einer Rändelung versehen, die sich entlang der gesamten Oberfläche der Lagerbuchse erstreckt. Diese Rändelung besteht typischerweise aus quer zu der Längsachse geführten, spiralartig über die Oberfläche verlaufenden Einschnittlinien, von denen eine Vielzahl parallel zueinander geführt sind. Weitere Einschnittlinien verlaufen, diese erste Linienschar kreuzend, in einer zweiten, schräg zu der Längsachse der Lagerbuchse geführten Richtung, so dass sich ein feines, rautenartiges Oberflächenmuster, durchzogen mit Einschnitten, die typischerweise Bruchteile von Millimetern breit und tief sind, ergibt.

Die Idee hinter dieser Rändelung ist, dass beim Herstellen des Schleifelements, welches durch Einlegen der Lagerbuchse in eine Presseinrichtung, Ausfüllen des umgebenden Raumes mit einem Bindemittel-Schleifmittel-Gemisch (als Schüttware mit noch nicht vernetztem Bindemittel) und Verpressen und thermisches Aushärten des Bindemittels zum Bilden des Abrasivkörpers geschieht, Bindemittel in die feinen Rillen der Rändelung fließt und so einen sicheren Halt zur Oberfläche der Lagerbuchse ausbildet.

Im praktischen Betrieb entsprechend der EP 708 205 arbeitender Schleifmaschinen hat sich bei der Anmelderin jedoch herausgestellt, dass es trotz der wie oben beschriebenen Ausgestaltung der Lagerbuchsen in signifikanter Zahl zu einem Versagen des sicheren Halts der Abrasivkörper auf den Lagerbuchsen kommt, wobei zwar weiterhin die Übertragung eines Drehmoments gegeben ist, der betroffene Abrasivkörper also rotiert, allerdings eine axiale Verschiebung des Abrasivkörpers auf der Lagerbuchse auftritt. Dieses Versagen ist insbesondere deshalb besonders ärgerlich und verursacht kostspielige Schäden, da dadurch der Abrasivkörper mit seiner von der Lagerbuchse heruntergedrückten Stirnseite an Elementen der Aufhängung der Schleifelemente, typischerweise zum Beispiel eine Aufhängungsgabel für die Drehachse, anstößt und diese mit der ebenfalls abrasiv wirkenden Stirnseite beschleift und beschädigt. Häufig ist der Beschliff dieser Maschinenteile dann derart massiv, dass die entsprechenden Teile ausgewechselt und ersetzt werden müssen, was nicht nur wegen des erforderlichen Ersatzteils mit Materialkosten, sondern auch mit Montagekosten und einem Ausfall von Arbeitszeit der Maschine und auch darüber mit einem finanziellen Verlust verbunden ist.

Die Erfinder haben sich deshalb auf die Suche nach Verbesserungen begeben, mit denen ein verbesserter, insbesondere axialer Halt der Abrasivkörper auf den Lagerbuchsen erreicht werden kann, um wie oben beschriebene Aus- und Unfälle vorteilhafterweise insgesamt zu vermeiden, jedenfalls aber in ihrer Häufigkeit deutlich zu reduzieren.

Nach intensiven Studien und mehreren Versuchen, haben die Erfinder für die oben beschriebene Aufgabenstellung eine Lösung gefunden. Diese besteht in einer Lagerbuchse, wie sie im Anspruch 1 bezeichnet ist. Vorteilhafte Weiterbildungen einer solchen Lagerbuchse sind in den abhängigen Ansprüchen 2 bis 6 angegeben. In einem weiteren Aspekt wird mit der Erfindung dann auch ein mit einer solchen Lagerbuchse versehenes, neuartiges Schleifelement angegeben (vergleiche Anspruch 7). Eine vorteilhafte Weiterbildung eines solchen Schleifelements ist in Anspruch 8 bezeichnet.

Demgemäß zeichnet sich eine erfindungsgemäße, eine Längsachse und eine im wesentlichen zylinderförmige Außenfläche aufweisende Lagerbuchse für ein Schleifelemente für das abrasive Bearbeiten von Oberflächen im Gleis verlegter Schienen während einer Überfahrt dadurch aus, dass auf der Außenfläche wenigstens ein um den Umfang umlaufender Einstich mit einem gegenüber der Außenfläche einen geringeren Durchmesser aufweisenden Grund und von dem Grund zu der Außenfläche führenden Flankenwänden vorgesehen ist, wobei die Flankenwände ausgehend von der Außenfläche zu dem Grund des Einstichs in einem Winkel α zu der Längsachse der Lagerbuchse verlaufen und der Winkel α zwischen 30° und 75° beträgt.

Die Erfinder haben hier für eine Verbesserung der axialen Festigkeit und des axialen Halts des Abrasivkörpers auf der Lagerbuchse zunächst den Ansatz verfolgt, einen Formschluss zu schaffen über einen Absatz, der ein Verrutschen des Abrasivkörpers in axialer Richtung der Lagerbuchse verhindern soll. Mit einem solchen einfachen Ansatz eines Absatzes, insbesondere eines solchen, der gemäß der ersten intuitiv angenommenen Versuche im rechten Winkel zur Längsachse der Lagerbuchse stand, konnten indes noch keine zufriedenstellenden Ergebnisse erreicht werden. Nähere Analysen haben gezeigt, dass bei einem rechtwinkligen Absatz im Produktionsprozess des Abrasivkörpers in diesem Fehlstellen entstehen, die das Erreichen eines effizienten Formschlusses verhindern. Erst durch die Ausgestaltung dieses Absatzes bzw. Hinterschnitts als Einstich mit den wie bezeichnet gegenüber der Längsachse der Lagerbuchse im Winkel verlaufenden Flankenwänden konnte ein signifikant verbesserter Halt des Abrasivkörpers auf der Lagerbuchse in Bezug auf eine mögliche axiale Verschiebung erreicht werden. Der Einstich weist dabei im Querschnitt insbesondere im Wesentlichen eine Trapezform auf, wobei die Flankenwände ausgehend von einem Grund sich aufweiten zu einer gegenüber dem Grund verbreiteten Öffnungsweite auf dem Niveau der sonstigen Außenfläche in den an den Einstich angrenzenden Bereichen.

Entgegen der zunächst naheliegenden Annahme, dass derart geneigte Flankenwände zu einem einfacheren Verrutschen des Abrasivkörpers relativ zu der Lagerbuchse und damit zu einem weniger guten Halt gegen einen axiales Verschieben führen, hat sich gezeigt, dass derart geneigte Flankenwände vielmehr einen verbesserten Halt gegenüber einer axiale Verschiebung bieten. Die Erfinder erklären sich diesen Effekt so, dass es möglicherweise bei anliegender Axialkraft aufgrund der rampenartigen Steigung der Flankenwände zu einem Klemmeffekt bzw. Keileffekt kommt, indem eine entlang der schrägen Linie der Flankenwand geführte Kraftkomponente zu einer Reaktion führt, die im Bereich nahe des Einstichs erhöhte Radialspannungen zwischen Lagerbuchse und Abrasivkörper bewirkt, welche mit zunehmender axialer Last ebenfalls zunehmen und so einen verbesserten axialen Halt bewirken. Ungeachtet der Frage, ob diese theoretischen Überlegungen der Erfinder nun tatsächlich zutreffend sind oder fehl gehen, haben jedenfalls durchgeführte Versuche ergeben, dass sich mit in beanspruchter und vorstehend beschriebener Weise ausgebildeten Lagerbuchsen weitaus höhere auf dem Abrasivkörper relativ zu der Lagerbuchse wirkende Axialkräfte bei gleicher axialer Verschiebung des Abrasivkörpers relativ zu der Lagerbuchse aufnehmen lassen, als mit der bisher üblichen und bekannten Bauform der Lagerbuchse und auch als mit anderen, versuchsweise getesteten Formen.

Bei Untersuchungen haben sich die im Anspruch genannten Winkel α zwischen 30° und 75° als geeignet erwiesen. Insbesondere führten in diesem Bereich dabei Winkel oberhalb von 34° zu guten Ergebnissen. Dabei ist die Spanne des Winkels α nach oben hin (also in Richtung des rechten Winkels) aufgrund einer mit steigendem Winkel in dem Abrasivkörper im Bereich des Einstichs in der Lagerbuchse zu beobachtenden höheren Fehlstellendichte und der damit einhergehenden Schwächung des Formschlusses begrenzt. Nach unten hin ist die Spanne des Winkels α durch die mit geringerem Winkel abnehmende Wirksamkeit des Einstichs gegen axiales Verschieben und zudem durch die bei flacherem Winkel steigende Gefahr eines Aufplatzens des Abrasivkörpers durch zu hohe Radialspannungen begrenzt, insbesondere wenn der Abrasivköper durch fortgesetzten Verschleiß im Betrieb im Durchmesser immer weiter abnimmt und seine verbleibende Restwandstärke kontinuierlich an Tragfähigkeit verliert. In einer aktuell bevorzugten Variante liegt der Winkel α zum Beispiel bei 60° für beide Flankenwände. Grundsätzlich ist eine Symmetrie nicht erforderlich, allerdings wird ein gleicher Wert des Winkels für beide Flankenwände bevorzugt (wobei der Winkel jeweils mit umgekehrtem Vorzeichen zu bestimmen ist).

In einer möglichen Ausgestaltungsvariante der Erfindung weist die Lagerbuchse in Richtung der Längsachse axial voneinander beabstandet zwei Einstiche auf, die insbesondere im Wesentlichen identische Abmessungen aufweisen können. Diese beiden Einstiche können insbesondere parallel zueinander verlaufen. Mit zwei derartigen Einstichen, dies haben Versuche der Erfinder gezeigt, kann der verbesserte Halt gegenüber Axialkräften noch einmal gesteigert werden.

Für eine zusätzliche Sicherung des Abrasivkörpers an der Lagerbuchse, insbesondere für eine gute Anbindung zu Übertragung von Drehmomenten, kann die Lagerbuchse auf ihrer Außenfläche außerhalb des wenigstens einen Einstichs gerändelt sein. In dem Bereich des wenigstens einen Einstichs kann sie insbesondere eine glatte und ungerändelte Oberfläche aufweisen, was nicht zuletzt auch die Produktion vereinfacht, da das Aufbringen einer Rändelung in den Bereichen eines Einstichs produktionstechnisch aufwändig wäre.

Wenn die Lagerbuchse in dem Bereich des wenigstens einen Einstichs eine glatte und ungerändelte Oberfläche aufweist, auf ihrer Außenfläche außerhalb des wenigstens einen Einstichs jedoch gerändelt ist, so wird ein Flächenverhältnis der gerändelten Oberfläche zu der ungerändelten Oberfläche von zwischen 1:1 und 4:1 bevorzugt. Dieses Verhältnis kann insbesondere zwischen 1,5:1 und 2,5:1 liegen. In einem Ausführungsbeispiel lag dieses Verhältnis zum Beispiel bei 1,8:1.

Gemäß einer weiteren vorteilhaften Weiterbildung der Erfindung weist die Lagerbuchse im Bereich des wenigstens einen Einstichs eine Restwandstärke von 50 % bis 85 % ihrer Wandstärke außerhalb des wenigstens einen Einstichs auf. So kann zum Beispiel, wie dies in einem aktuellen Ausführungsbeispiele der Fall ist, die Wandstärke außerhalb des wenigstens einen Einstichs etwa 5,9 mm betragen, der wenigstens eine Einstich eine Tiefe von 2 mm aufweisen, so dass im Bereich des wenigstens einen Einstichs eine Restwandstärke von 3,9 mm verbleibt. Eine gewisse Tiefe des wenigstens einen Einstichs ist für den einerseits den Formschluss gebenden Absatz, andererseits durch die Neigung der Flankenwände den oben als Keileffekt angenommenen Effekt für den zusätzlichen Halt erforderlich. Andererseits darf natürlich die Restwandstärke nicht so weit reduziert werden, dass sich hier eine zu starke Schwächung der Stabilität der Lagerbuchse ergibt und daraus wiederum Probleme im Betrieb oder auch bereits in der Produktion erwachsen können.

In der erfindungsgemäßen Lagerbuchse sind an ihren einander gegenüberliegenden Stirnenden insbesondere und mit Vorteil auf einer Innenseite Lagersitze zur Aufnahme von Kugel-, Rollen-oder Wälzlagern vorgesehen. Diese Lagersitze können insbesondere durch ein Aufweiten des ihr Durchmessers der Lagerbuchse an diesen Positionen gebildet sein, so dass in die aufgeweiteten Innendurchmesser die entsprechenden Lager eingebracht werden können. Diese Lager bilden dann die frei drehbare Verbindung zur Rotationsachse, die im Betrieb feststehend in der Schleifvorrichtung arretiert ist.

Mit der Erfindung wird weiterhin ein Schleifelemente fürs abrasive Bearbeiten von Oberflächen im Gleis verlegter Schienen während einer Überfahrt angegeben, welches eine zentrale Lagerbuchse aufweist, wie sie vorstehend beschrieben ist, und einen um die Lagerbuchse herum angeordneten, mit der Lagerbuchse drehfest verbundenen, auf der Außenfläche der Lagerbuchse aufliegenden, in einer Bindemittelmatrix eingebundene Schleiftpartikel, beispielsweise Korundkörner, aufweisenden Abrasivkörper.

Für eine noch bessere Anbindung des Abrasivkörpers an die Lagerbuchse kann eine auf die Außenfläche der Lagerbuchse aufgebrachte Bindemittelschicht vorgesehen sein, die an dieser Stelle eine verbesserte Grundhaftung bietet. In der Produktion kann eine solche Bindemittelschicht zum Beispiel durch Aufsprühen oder in sonstiger Weise geartetes Aufbringen einer ersten Bindemittelschicht auf die Lagerbuchse realisiert werden, bevor dann die Mischung aus Schleiftpartikeln und Bindemittelmaterial aufgebracht und in einer Formpresse verpresst und durch thermische Behandlung und Vernetzen des Binders ausgehärtet wird.

Weitere Vorteile und Merkmale der Erfindung ergeben sich aus der nachfolgenden Beschreibung eines Ausführungsbeispiels anhand der beigefügten Figuren. Dabei zeigen:
- Fig. 1: eine Längsschnittdarstellung einer erfindungsgemäß ausgebildeten Lagerbuchse;
- Fig. 2: eine vergrößerte Darstellung des in Fig. 1 mit Z bezeichneten Details;
- Fig. 3: eine isometrische Ansicht einer wie in Figuren 1 und 2 abgebildeten Lagerbuchse;
- Fig. 4: ein mit einer wie in den Figuren 1 bis 3 gezeigten Lagerbuchse und einem daran festgelegten Abrasivkörper gebildetes Schleifelement in einer mit einer Axialkraft belasteten Situation zur Veranschaulichung der von den Erfindern angenommenen Wirkweise der schrägen Flankenwände der Einstiche und des sich daraus ergebenden Klemmeffekts.

In den Figuren sind in unterschiedlichen, weitgehend schematisierten Darstellungen ein Ausführungsbeispiel einer erfindungsgemäßen Lagerbuchse sowie ein Ausführungsbeispiel eines unter Verwendung einer solchen Lagerbuchse gebildeten Schleifelements dargestellt. Dabei sind die Figuren, wenngleich sie relevante Details mit einer deutlichen Genauigkeit aufzeigen, ansonsten als bloße Schemadarstellungen zu verstehen. Sie enthalten insbesondere nicht sämtliche Einzelheiten und sind auch nicht zwingend maßstabsgerecht.

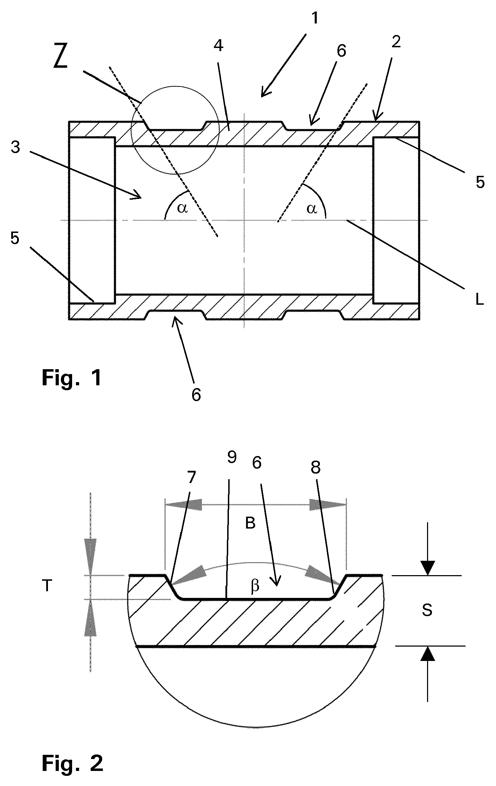

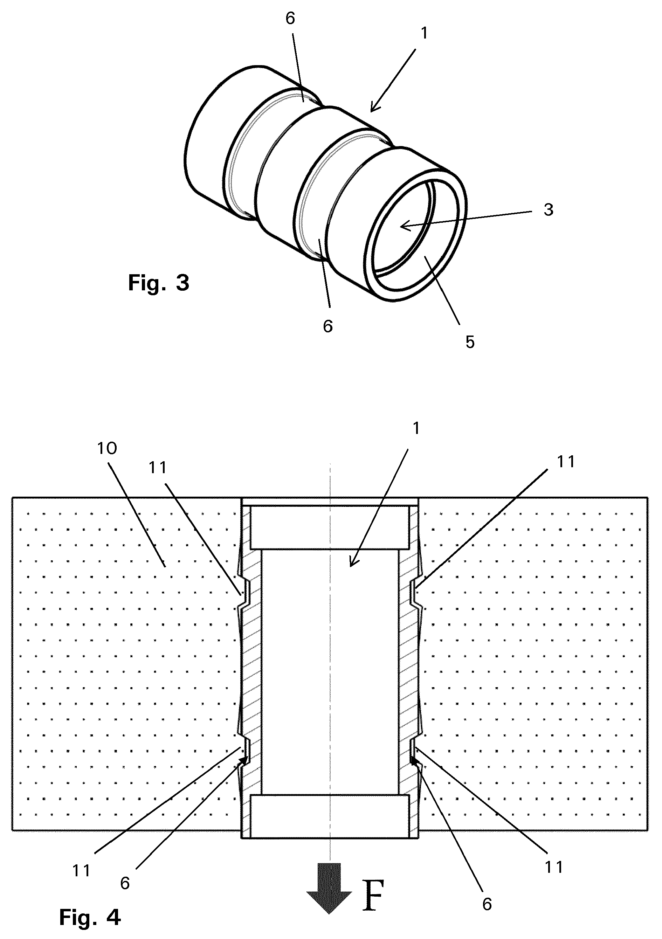

Eine erfindungsgemäße Lagerbuchse ist in den figürlichen Darstellungen allgemein mit der Bezugsziffer 1 bezeichnet. Die erfindungsgemäße Lagerbuchse 1 ist im Wesentlichen zylinderförmig gebildet, wie insbesondere die Figuren 1 und 3 erkennen lassen. Sie weist eine Außenfläche 2 und eine innere, durchgehende Öffnung 3 auf. Die Lagerbuchse 1 ist insoweit im Wesentlichen rohrförmig gebildet mit einer die durchgehende Öffnung 3 umschließenden Außenwand 4. An den einander entlang einer Längsachse L der Lagerbuchse 1 gegenüberliegenden Stirnseiten ist ein Innendurchmesser der Öffnung 3 jeweils vergrößert und ist so jeweils ein Lagersitz 5 für ein Rotationslager, zum Beispiel ein Kugellager oder ein Rollenlager, auf der Innenseite der Außenwand 4 gebildet.

Das besondere an der Lagerbuchse 1 sind nun zwei ringförmig in die Außenwand 4 eingebrachte Einstiche 6, an denen die Außenfläche 2 zurückspringt, in deren Bereich die Außenwand 4 eine reduzierte Wandstärke aufweist. Die beiden Einstiche 6 sind bei dem gezeigten Ausführungsbeispiel symmetrisch angeordnet und mit gleichen Dimensionen gleich geformt. Das besondere an den Einstichen 6 sind die, in der vergrößerten Darstellung gemäß Figur 2 gut zu erkennenden Flankenwände 7 und 8, die ausgehend von einem ebenen Grund 9 des jeweiligen Einstichs 6 wieder bis auf das Niveau der sonstigen Außenfläche 2 führen. Diese Flankenwände 7, 8 verlaufen nicht etwa senkrecht zur Längsachse L, sondern sind schräg zu dieser orientiert und schneiden diese unter einem Winkel α. Es ergibt sich hierbei eine keilförmige Anordnung und Öffnung der Flankenwände 7, 8 und somit ein im wesentlichen trapezförmiger Querschnitt des Einstichs 6. Gerade diese von einem rechten Winkel zur Längsachse L abweichende Verlaufsrichtung und die Schrägstellung der Flankenwände 7, 8 ist es, die die Erfindung ausmacht. Dabei liegt erfindungsgemäß der Winkel α in einem Bereich zwischen 30° und 75°, in dem gezeigten Ausführungsbeispiel beträgt er für beide Flankenwände 7, 8 gleichermaßen 60° (genau genommen einmal +60°, einmal -60°). Entsprechend liegt das Maß eines Öffnungswinkels β der Flankenwände 6, 7 in diesem Ausführungsbeispiel ebenfalls bei 60°. Diese Schrägstellung der Flankenwände 7, 8 im Zusammenspiel mit dem durch die Einstiche 6 erhaltenen Flächenversatz ist es, die für einen deutlich verbesserten axialen Halt eines um die Lagerbuchse 1 gebildeten Abrasivkörpers 10, wie er in Figur 4 dargestellt ist, bei einer anliegenden Axialkraft F sorgt.

In Figur 4 ist eine Situation dargestellt, bei der eine solche Axialkraft F auf die Lagerbuchse 1 aufgebracht ist. Hier wird in einer deutlich überzeichneten Darstellung möglicher Formänderungen zu Erläuterungszwecken veranschaulicht, was nach Überzeugung der Erfinder in einer solchen Situation geschieht. Die in die Einstiche 6 hineinragenden Materialfortsätze 11 des Abrasivkörpers 10, der durch Verpressen einer Mischung aus Schleifpartikeln (insbesondere Korundteilchen) und einem Bindemittel, zum Beispiel einem pulverförmigen Harz) und thermisch initiiertes Vernetzen des Bindemittels um die Lagerbuchse 1 geformt ist, rutschen hierbei entlang der schräg gestellten Flankenwände 7 bzw. 8 aus den Einstichen 6 heraus, wodurch sich eine Radialspannung zwischen dem Abrasivkörper 10 und der Lagerbuchse 1 in an die Einstiche 6 angrenzenden Bereichen der Lagerbuchse 1 ergibt. Die erhöhten Radialspannungen in den an die Einstiche angrenzenden Bereichen führen wiederum zu einem verbesserten axialen Halt des Abrasivkörpers 10 auf der Lagerbuchse 1. Dieses theoretische Modell haben sich jedenfalls die Erfinder im Hinblick auf die Wirkung der erfindungsgemäß gebildeten Einstiche 6 überlegt. Durchgeführte Versuche zeigen jedenfalls eine deutlich verbesserte Widerstandsfähigkeit gegen und einen verbesserten Halt des Abrasivkörpers 10 auf der Lagerbuchse 1 bei anliegender Axialkraft F.

In dem gezeigten Ausführungsbeispiel waren die Bereiche der Einstiche 6 und insbesondere des jeweiligen Grundes 9 der Einstiche 6 mit glatter Oberfläche gebildet, die Außenfläche 2 jenseits der Einstiche 6 mit einer, in den Figuren nicht näher dargestellten, Rändelung in Form von zwei Scharen zueinander parallel verlaufender Rändellinien (oder Rillen) versehen, wobei sich Rändellinien der jeweils einen Schar mit Rändellinien der jeweils anderen Schar schneiden, wodurch ein Rautenmuster gebildet wird. Diese Rändelung auf der Außenfläche 2 ergibt eine zusätzliche axiale Sicherung des Abrasivkörpers 10 auf der Lagerbuchse 1, ist aber insbesondere auch für einen Halt bei anliegenden Drehmomenten bei Rotation um die Längsachse L verantwortlich.

In Figur 2 ist noch die Breite B des Einstichs 6 zu erkennen, die im gezeigten Ausführungsbeispiel 15 mm beträgt. Die Lagerbuchse 1, die in dem gezeigten Ausführungsbeispiel eine Gesamtlänge von 84 mm aufweist, hat somit ein Verhältnis der nach außen vorstehenden Außenfläche 2 zu der mit den Einschnitten 6 versehenen Flächenbereiche von 18:10.

Die Wandstärke S der Außenwand 4 beträgt im gezeigten Ausführungsbeispiel etwa 5,9 mm, die Tiefe T der Einstiche 5 liegt bei 2 mm. Entsprechend ist hier das Verhältnis der Restwandstärke (S - T) zur ursprünglichen Wandstärke S bei etwa 2:3.

An dieser Stelle ist noch einmal zu betonen, dass das vorstehend beschriebene, in den Figuren gezeigte Ausführungsbeispiel lediglich eine Möglichkeit der Umsetzung der Erfindung darstellt, die Erfindung in ihrer Tragweite, wie sie in den nachstehenden Ansprüchen definiert ist, jedoch nicht beschränkt. Das Ausführungsbeispiel zeigt jedoch noch einmal, welche besonderen Effekte und welche Verbesserung des axialen Halts des Abrasivkörpers auf einer erfindungsgemäß gebildeten Lagerbuchse 1 erreicht werden kann.

### Bezugszeichenliste

- 1: Lagerbuchse
- 2: Außenfläche
- 3: Öffnung
- 4: Außenwand
- 5: Lagersitz
- 6: Einstich
- 7: Flankenwand
- 8: Flankenwand
- 9: Grund
- 10: Abrasivkörper
- 11: Materialfortsatz
- α: Winkel
- β: Winkel

- B: Breite
- F: Axialkraft
- L: Längsachse
- S: Wandstärke
- T: Tiefe

## Patentansprüche

1. Lagerbuchse (1) für ein Schleifelement für das abrasive Bearbeiten von Oberflächen im Gleis verlegter Schienen während einer Überfahrt, mit einer Längsachse (L) und einer im Wesentlichen zylinderförmigen Außenfläche (2), **dadurch gekennzeichnet, dass** auf der Außenfläche (2) wenigstens ein um den Umfang umlaufender Einstich (6) mit einem gegenüber der Außenfläche (2) einen geringeren Durchmesser aufweisenden Grund (9) und von dem Grund (9) zu der Außenfläche (2) führenden Flankenwänden (7, 8) vorgesehen ist, wobei die Flankenwände (7, 8) ausgehend von der Außenfläche (2) zu dem Grund (9) des Einstichs (6) in einem Winkel (α) zu der Längsachse (L) der Lagerbuchse verlaufen und dieser Winkel (α) zwischen 30° und 75° beträgt.

2. Lagerbuchse (1) nach Anspruch 1, **dadurch gekennzeichnet, dass** sie in Richtung der Längsachse (L) axial voneinander beabstandet zwei Einstiche (6) aufweist, die im Wesentlichen gleiche Abmessungen aufweisen.

3. Lagerbuchse (1) nach einem der vorhergehenden Ansprüche, **dadurch gekennzeichnet, dass** sie auf ihrer Außenfläche (2) außerhalb des wenigstens einen Einstichs (6) gerändelt ist.

4. Lagerbuchse (1) nach Anspruch 3, **dadurch gekennzeichnet, dass** sie in dem Bereich des wenigstens einen Einstichs (5) eine glatte, ungerändelte Oberfläche aufweist und dass das Flächenverhältnis der gerändelten Oberfläche zu der ungerändelten Oberfläche zwischen 1:1 und 4:1 liegt.

5. Lagerbuchse (1) nach einem der vorhergehenden Ansprüche, **dadurch gekennzeichnet, dass** diese im Bereich des wenigstens einen Einstichs (6) eine Restwandstärke (S-T) von 50% bis 85% ihrer Wandstärke (S) außerhalb des wenigstens einen Einstichs (6) aufweist.

6. Lagerbuchse (1) nach einem der vorhergehenden Ansprüche, **dadurch gekennzeichnet, dass** sie in ihren einander gegenüberliegenden Stirnenden auf einer Innenseite Lagersitze (4) zur Aufnahme von Kugel-, Rollen- oder Wälzlagern aufweist.

7. Schleifelement für das abrasive Bearbeiten von Oberflächen im Gleis verlegter Schienen während einer Überfahrt mit einer zentralen Lagerbuchse (1) nach einem der vorstehenden Ansprüche und einem um die Lagerbuchse (1) herum angeordneten, mit der Lagerbuchse (1) drehfest verbundenen, auf der Außenfläche (2) der Lagerbuchse (1) aufliegenden, in einer Bindemittelmatrix eingebundene Schleifpartikel aufweisenden Abrasivkörper (10).

8. Schleifelement nach Anspruch 7, **gekennzeichnet durch** eine auf die Außenfläche (2) der Lagerbuchse (1) aufgebrachte Bindemittelschicht zum Verbinden des Abrasivkörpers (10) mit der Lagerbuchse (1).

## Geänderte Patentansprüche

### Geänderte Patentansprüche gemäss Regel 137(2) EPÜ.

1. Lagerbuchse (1) für ein Schleifelement für das abrasive Bearbeiten von Oberflächen im Gleis verlegter Schienen während einer Überfahrt, mit einer Längsachse (L) und einer im Wesentlichen zylinderförmigen Außenfläche (2), wobei auf der Außenfläche (2) wenigstens ein um den Umfang umlaufender Einstich (6) mit einem gegenüber der Außenfläche (2) einen geringeren Durchmesser aufweisenden Grund (9) und von dem Grund (9) zu der Außenfläche (2) führenden Flankenwänden (7, 8) vorgesehen ist, **dadurch gekennzeichnet, dass** die Flankenwände (7, 8) ausgehend von der Außenfläche (2) zu dem Grund (9) des Einstichs (6) in einem Winkel (α) zu der Längsachse (L) der Lagerbuchse verlaufen und dieser Winkel (α) zwischen 30° und 75° beträgt und dass die Lagebuchse (1) in ihren einander gegenüberliegenden Stirnenden auf einer Innenseite Lagersitze (4) zur Aufnahme von Kugel-, Rollen- oder Wälzlagern aufweist.

2. Lagerbuchse (1) nach Anspruch 1, **dadurch gekennzeichnet, dass** sie in Richtung der Längsachse (L) axial voneinander beabstandet zwei Einstiche (6) aufweist, die im Wesentlichen gleiche Abmessungen aufweisen.

3. Lagerbuchse (1) nach einem der vorhergehenden Ansprüche, **dadurch gekennzeichnet, dass** sie auf ihrer Außenfläche (2) außerhalb des wenigstens einen Einstichs (6) gerändelt ist.

4. Lagerbuchse (1) nach Anspruch 3, **dadurch gekennzeichnet, dass** sie in dem Bereich des wenigstens einen Einstichs (5) eine glatte, ungerändelte Oberfläche aufweist und dass das Flächenverhältnis der gerändelten Oberfläche zu der ungerändelten Oberfläche zwischen 1:1 und 4:1 liegt.

5. Lagerbuchse (1) nach einem der vorhergehenden Ansprüche, **dadurch gekennzeichnet, dass** diese im Bereich des wenigstens einen Einstichs (6) eine Restwandstärke (S-T) von 50% bis 85% ihrer Wandstärke (S) außerhalb des wenigstens einen Einstichs (6) aufweist.

6. Schleifelement für das abrasive Bearbeiten von Oberflächen im Gleis verlegter Schienen während einer Überfahrt mit einer zentralen Lagerbuchse (1) nach einem der vorstehenden Ansprüche und einem um die Lagerbuchse (1) herum angeordneten, mit der Lagerbuchse (1) drehfest verbundenen, auf der Außenfläche (2) der Lagerbuchse (1) aufliegenden, in einer Bindemittelmatrix eingebundene Schleifpartikel aufweisenden Abrasivkörper (10).

7. Schleifelement nach Anspruch 6, **gekennzeichnet durch** eine auf die Außenfläche (2) der Lagerbuchse (1) aufgebrachte Bindemittelschicht zum Verbinden des Abrasivkörpers (10) mit der Lagerbuchse (1).
